# EUROPEAN PATENT APPLICATION

(11) **EP 4 346 148 A1**
(43) Date of publication of application: **03.04.2024**
(21) Application number: 23196137.6
(22) Date of filing: 08.09.2023
(51) Int. Cl.: H04L 5/00

(54) **JOINT SENSING AND POSITIONING IN TELECOMMUNICATION SYSTEMS**

(30) Priority: 22.09.2022 GB 202213826
(71) Applicant: Nokia Technologies Oy, 02610 Espoo (FI)
(72) Inventor: Golzadeh, Moeinreza, 33540 Tampere (FI); Peruga Nasarre Ismael, 28019 Madrid (ES); Hooli, Kari Juhani, 90620 Oulu (FI); Tervo, Oskari, 90630 Oulu (FI); Tiirola, Esa Tapani, 90620 Oulu (FI); Talvitie, Jukka Olavi, 33480 Ylöjärvi (FI); Valkama, Mikko, 37130 Nokia (FI)
(74) Representative: Nokia EPO representatives

(57) **Abstract**

A method, apparatus and computer program is described comprising organising a plurality of resource elements of a mobile communication system into a plurality of groups, wherein each resource element is identified by an OFDM symbol in the time domain and a subcarrier in the frequency domain. Each group of resource elements comprises *n* OFDM symbols and n subcarriers; n resource elements in each group contain positioning signals; and within each OFDM symbol, a frequency distance between consecutive resource elements containing positioning signals is not constant, such that an irregular distribution of positioning signal containing resource elements is provided.

## Description

### Field

The present specification relates to joint sensing and positioning.

### Background

The use of positioning reference signals for use in determining positioning information for user devices or other elements of a mobile communication system in known. There remains a need for further developments in this field.

### Summary

In a first aspect, this specification describes an apparatus comprising: means for organising a plurality of resource elements of a mobile communication system into a plurality of groups, wherein each resource element is identified by a time domain OFDM symbol and a frequency domain subcarrier, wherein: each group of resource elements comprises n OFDM symbols and n subcarriers; n resource elements (and no more) in each group contain positioning signals; and within each OFDM symbol, a frequency distance between consecutive resource elements containing positioning signals is not constant, such that an irregular distribution of positioning signal containing resource elements is provided (i.e. the distance between one resource element containing a positioning signal and the next within each OFDM symbol is not constant, such that said irregular distribution of positioning signals containing resource elements is provided). Thus, the resouce elements can be organised into groups of n OFDM symbols (and no more) and n subcarriers (and no more), wherein n resource elements (and no more) in each group contain positioning signals.

The apparatus may further comprise means for transmitting said resource elements as part of a joint positioning and sensing scheme.

In some example embodiments, resource elements containing positioning signals are available for sensing purposes.

The apparatus may further comprise means for signalling to one or more user devices of the mobile communication system providing information of the organisation of said resource elements.

The apparatus may further comprise means for receiving an indication that a particular user device of the mobile communication system supports signals containing said irregular distribution of positioning signal containing resource elements.

In some example embodiments, one (and only one) of the n subcarriers of a group carries a positioning signal.

In some example embodiments, during each OFDM symbol, a group carries one (e.g. only one) positioning signal.

In some example embodiments, said n OFDM symbols and n subcarriers comprise n non-overlapping resource element patterns that can be assigned to n different cells or n different transmission points.

In a second aspect, this specification describes an apparatus (e.g. a user device of a mobile communication system) comprising: means for determining organisation of a plurality of resource elements of a mobile communication system used for joint positioning and sensing based on signalling received from a network node of a mobile communication system, said signalling providing information of said organisation, wherein each resource element is identified by a time domain OFDM symbol and a frequency domain subcarrier, wherein the plurality of resource elements is organised into a plurality of groups, wherein: each group of resource elements comprises n OFDM symbols and n subcarriers; n resource elements in each group contain positioning signals; and within each OFDM symbol, a frequency distance between consecutive resource elements containing positioning signals is not constant, such that an irregular distribution of positioning signal containing resource elements is provided; and means for determining data for use in generating a position estimate based on the received positioning and sensing signal. Thus, the resouce elements can be organised into groups of n OFDM symbols (and no more) and n subcarriers (and no more), wherein n resource elements (and no more) in each group contain positioning signals.

The apparatus may further comprise means for providing an output reporting the determined data for use in generating said position estimate.

The apparatus may further comprise means for providing an indication that said apparatus supports signals containing said irregular distribution of positioning signal containing resource elements.

In some example embodiments, one (e.g. only one) of the subcarriers of a group carries a positioning signal.

In some example embodiments, during each OFDM symbol, a group carries one (e.g. only one) positioning signal.

In some example embodiments said n OFDM symbols and n subcarriers comprise n non-overlapping resource element patterns that can be assigned to n different cells or n different transmission points.

In a third aspect, this specification describes an apparatus (e.g. a network node of a mobile communication system) comprising: means for transmitting a joint positioning and sensing signal comprising a plurality of resource elements of a mobile communication system organised into a plurality of groups, wherein each resource element is identified by a time domain OFDM symbol and a frequency domain subcarrier, wherein: each group of resource elements comprises n OFDM symbols and n subcarriers; n resource elements in each group contain positioning signals; and within each OFDM symbol, a frequency distance between consecutive resource elements containing positioning signals is not constant, such that an irregular distribution of positioning signal containing resource elements is provided. Thus, the resouce elements can be organised into groups of n OFDM symbols (and no more) and n subcarriers (and no more), wherein n resource elements (and no more) in each group contain positioning signals.

The apparatus may further comprise means for generating the joint positioning and sensing signal.

The apparatus may further comprise means for receiving, in response to the joint positioning and sensing signal, a positioning estimate, or data (such as Time of Arrival data) for use in generating a position estimate, based on the received positioning and sensing signal. The positioning estimate or data may be obtained from a user device of a mobile communication system.

The apparatus may further comprise means for processing a response to the joint positioning and sensing as part of a sensing arrangement (e.g. radar or some similar sensing system).

The apparatus may further comprise means for providing signalling information providing information of said organisation of said joint positioning and sensing signal.

The apparatus may further comprise means for receiving an indication that a particular user device of the mobile communication system supports signals containing said irregular distribution of positioning signal containing resource elements.

In some example embodiments, one (e.g. only one) of the subcarriers of a group carries a positioning signal.

In some example embodiments, during each OFDM symbol, a group carries one (e.g. only one) positioning signal.

In some example embodiments, said n OFDM symbols and n subcarriers comprise n non-overlapping resource element patterns that can be assigned to n different cells or n different transmission points.

In the first to third aspects, the said means may comprise: at least one processor; and at least one memory including computer program code. The at least one memory and computer program code may be configured to, with the at least one processor, cause the performance of the apparatus.

In a fourth aspect, this specification describes a method comprising: organising a plurality of resource elements of a mobile communication system into a plurality of groups, wherein each resource element is identified by an OFDM symbol in the time domain and a subcarrier in the frequency domain, wherein: each group of resource elements comprises n OFDM symbols and n subcarriers; n resource elements in each group contain positioning signals; and within each OFDM symbol, a frequency distance between consecutive resource elements containing positioning signals is not constant, such that an irregular distribution of positioning signal containing resource elements is provided.

The method may comprise transmitting said resource elements as part of a joint positioning and sensing scheme.

The method may comprise providing information of the organisation of said resource elements to one or more user devices of the mobile communication system.

The method may comprise receiving an indication that a particular user device of the mobile communication system supports signals containing said irregular distribution of positioning signal containing resource elements.

In some example embodiments, one (e.g. only one) of the subcarriers of a group carries a positioning signal. Alternatively, or in addition, in some example embodiments, during each OFDM symbol, a group carries one (e.g. only one) positioning signal.

In some example embodiments, said n OFDM symbols and n subcarriers comprise n non-overlapping resource element patterns that can be assigned to n different cells or n different transmission points.

In a fifth aspect, this specification describes a method comprising: determining organisation of a plurality of resource elements of a mobile communication system used for joint positioning and sensing based on signalling received from a network node of a mobile communication system, said signalling providing information of said organisation, wherein each resource element is identified by a time domain OFDM symbol and a frequency domain subcarrier, wherein the plurality of resource elements is organised into a plurality of groups, wherein: each group of resource elements comprises n OFDM symbols and n subcarriers; n resource elements in each group contain positioning signals; and within each OFDM symbol, a frequency distance between consecutive resource elements containing positioning signals is not constant, such that an irregular distribution of positioning signal containing resource elements is provided; and determining data for use in generating a position estimate based on the received positioning and sensing signal.

The method may further comprise providing an output reporting the determined data for use in generating said position estimate.

The method may further comprise providing an indication that a particular user device supports signals containing said irregular distribution of positioning signal containing resource elements.

In some example embodiments, one (e.g. only one) of the subcarriers of a group carries a positioning signal. Alternatively, or in addition, in some example embodiments, during each OFDM symbol, a group carries one (e.g. only one) positioning signal.

In some example embodiments, said n OFDM symbols and n subcarriers comprise n non-overlapping resource element patterns that can be assigned to n different cells or n different transmission points.

In a sixth aspect, this specification describes a method comprising: transmitting a joint positioning and sensing signal comprising a plurality of resource elements of a mobile communication system organised into a plurality of groups, wherein each resource element is identified by a time domain OFDM symbol and a frequency domain subcarrier, wherein: each group of resource elements comprises n OFDM symbols and n subcarriers; n resource elements in each group contain positioning signals; and within each OFDM symbol, a frequency distance between consecutive resource elements containing positioning signals is not constant, such that an irregular distribution of positioning signal containing resource elements is provided.

The method may further comprise generating the joint positioning and sensing signal.

The method may further comprise receiving, in response to the joint positioning and sensing signal, a positioning estimate, or data (such as Time of Arrival data) for use in generating a position estimate, based on the received positioning and sensing signal.

The method may further comprise processing a response to the joint positioning and sensing as part of a sensing arrangement (e.g. radar or some similar sensing system).

The method may further comprise providing signalling information providing information of said organisation of said joint positioning and sensing signal.

The method may further comprise receiving an indication that a particular user device of the mobile communication system supports signals containing said irregular distribution of positioning signal containing resource elements.

In some example embodiments, one (e.g. only one) of the subcarriers of a group carries a positioning signal. Alternatively, or in addition, in some example embodiments, during each OFDM symbol, a group carries one (e.g. only one) positioning signal.

In some example embodiments, said n OFDM symbols and n subcarriers comprise n non-overlapping resource element patterns that can be assigned to n different cells or n different transmission points.

In a seventh aspect, this specification describes a method comprising: signalling between a network node of a mobile communication system and one or more user devices, said signalling providing information of an organisation of a plurality of resource elements of the mobile communication system used for joint positioning and sensing, wherein the reference signal is constructed from multiple positioning signals organised into a plurality of groups, wherein each resource element is identified by a time domain OFDM symbol and a frequency domain subcarrier, wherein the plurality of resource elements is organised into a plurality of groups, wherein: each group of resource elements comprises n OFDM symbols and n subcarriers; n resource elements in each group contain positioning signals; and within each OFDM symbol, a frequency distance between consecutive resource elements containing positioning signals is not constant, such that an irregular distribution of positioning signal containing resource elements is provided.

In some example embodiment, said signalling includes a particular user device of the mobile communication system indicating to the network node that signals containing said irregular distribution of positioning signal containing resource elements are supported by said user device.

In some example embodiments, one (e.g. only one) of the subcarriers of a group carries a positioning signal. Alternatively, or in addition, in some example embodiments, during each OFDM symbol, a group carries one (e.g. only one) positioning signal.

In some example embodiments, said n OFDM symbols and n subcarriers comprise n non-overlapping resource element patterns that can be assigned to n different cells or n different transmission points.

In an eighth aspect, this specification describes computer-readable instructions which, when executed by a computing apparatus, cause the computing apparatus to perform (at least) any method as described with reference to the third to seventh aspects.

In a ninth aspect, this specification describes a computer-readable medium (such as a non-transitory computer-readable medium) comprising program instructions stored thereon for performing (at least) any method as described with reference to the third to seventh aspects.

In a tenth aspect, this specification describes an apparatus comprising: at least one processor; and at least one memory including computer program code which, when executed by the at least one processor, causes the apparatus to perform (at least) any method as described with reference to the third to seventh aspect.

In an eleventh aspect, this specification describes a reference signal suitable for joint positioning and sensing comprising a plurality of resource elements of a mobile communication system, wherein the reference signal is constructed from multiple positioning signals organised into a plurality of groups, wherein each resource element is identified by a time domain OFDM symbol and a frequency domain subcarrier, wherein: each group of resource elements comprises n OFDM symbols and n subcarriers; n resource elements in each group contain positioning signals; and within each OFDM symbol, a frequency distance between consecutive resource elements containing positioning signals is not constant, such that an irregular distribution of positioning signal containing resource elements is provided. In some example embodiments, one (e.g. only one) of the subcarriers of a group may carry a positioning signal. Alternatively, or in addition, in some example embodiments, during each OFDM symbol, a group carries one (e.g. only one) positioning signal.

In a twelfth aspect, this specification describes a computer program comprising instructions for causing an apparatus to perform at least the following: organising a plurality of resource elements of a mobile communication system into a plurality of groups, wherein each resource element is identified by an OFDM symbol in the time domain and a subcarrier in the frequency domain, wherein: each group of resource elements comprises n OFDM symbols and n subcarriers; n resource elements in each group contain positioning signals; and within each OFDM symbol, a frequency distance between consecutive resource elements containing positioning signals is not constant, such that an irregular distribution of positioning signal containing resource elements is provided.

In a thirteenth aspect, this specification describes a computer program comprising instructions for causing an apparatus to perform at least the following: organising a plurality of resource elements of a mobile communication system into a plurality of groups, wherein each resource element is identified by an OFDM symbol in the time domain and a subcarrier in the frequency domain, wherein: each group of resource elements comprises n OFDM symbols and n subcarriers; n resource elements in each group contain positioning signals; and within each OFDM symbol, a frequency distance between consecutive resource elements containing positioning signals is not constant, such that an irregular distribution of positioning signal containing resource elements is provided.

In a fourteenth aspect, this specification describes a computer program comprising instructions for causing an apparatus to perform at least the following: determining organisation of a plurality of resource elements of a mobile communication system used for joint positioning and sensing based on signalling received from a network node of a mobile communication system, said signalling providing information of said organisation, wherein each resource element is identified by a time domain OFDM symbol and a frequency domain subcarrier, wherein the plurality of resource elements is organised into a plurality of groups, wherein: each group of resource elements comprises n OFDM symbols and n subcarriers; n resource elements in each group contain positioning signals; and within each OFDM symbol, a frequency distance between consecutive resource elements containing positioning signals is not constant, such that an irregular distribution of positioning signal containing resource elements is provided; and determining data for use in generating a position estimate based on the received positioning and sensing signal.

In a fifteenth aspect, this specification describes a computer program comprising instructions for causing an apparatus to perform at least the following: transmitting a joint positioning and sensing signal comprising a plurality of resource elements of a mobile communication system organised into a plurality of groups, wherein each resource element is identified by a time domain OFDM symbol and a frequency domain subcarrier, wherein: each group of resource elements comprises n OFDM symbols and n subcarriers; n resource elements in each group contain positioning signals; and within each OFDM symbol, a frequency distance between consecutive resource elements containing positioning signals is not constant, such that an irregular distribution of positioning signal containing resource elements is provided.

In a sixteenth aspect, this specification describes a computer program comprising instructions for causing an apparatus to perform at least the following: signalling between a network node of a mobile communication system and one or more user devices, said signalling providing information of an organisation of a plurality of resource elements of the mobile communication system used for joint positioning and sensing, wherein the reference signal is constructed from multiple positioning signals organised into a plurality of groups, wherein each resource element is identified by a time domain OFDM symbol and a frequency domain subcarrier, wherein the plurality of resource elements is organised into a plurality of groups, wherein: each group of resource elements comprises n OFDM symbols and n subcarriers; n resource elements in each group contain positioning signals; and within each OFDM symbol, a frequency distance between consecutive resource elements containing positioning signals is not constant, such that an irregular distribution of positioning signal containing resource elements is provided.

In a seventeenth aspect, this specification describes: a control module (or some other means) for organising a plurality of resource elements of a mobile communication system into a plurality of groups, wherein each resource element is identified by an OFDM symbol in the time domain and a subcarrier in the frequency domain, wherein: each group of resource elements comprises n OFDM symbols and n subcarriers; n resource elements in each group contain positioning signals; and within each OFDM symbol, a frequency distance between consecutive resource elements containing positioning signals is not constant, such that an irregular distribution of positioning signal containing resource elements is provided.

In an eighteenth aspect, this specification describes: a control module (or some other means) for determining organisation of a plurality of resource elements of a mobile communication system used for joint positioning and sensing based on signalling received from a network node of a mobile communication system, said signalling providing information of said organisation, wherein each resource element is identified by a time domain OFDM symbol and a frequency domain subcarrier, wherein the plurality of resource elements is organised into a plurality of groups, wherein: each group of resource elements comprises n OFDM symbols and n subcarriers; n resource elements in each group contain positioning signals; and within each OFDM symbol, a frequency distance between consecutive resource elements containing positioning signals is not constant, such that an irregular distribution of positioning signal containing resource elements is provided; and a processor (or some other means) for determining data for use in generating a position estimate based on the received positioning and sensing signal.

In a nineteenth aspect, this specification describes: a transmitter (or some other means) for transmitting a joint positioning and sensing signal comprising a plurality of resource elements of a mobile communication system organised into a plurality of groups, wherein each resource element is identified by a time domain OFDM symbol and a frequency domain subcarrier, wherein: each group of resource elements comprises n OFDM symbols and n subcarriers; n resource elements in each group contain positioning signals; and within each OFDM symbol, a frequency distance between consecutive resource elements containing positioning signals is not constant, such that an irregular distribution of positioning signal containing resource elements is provided.

In a twentieth aspect, this specification describes: a signalling module (or some other means) for signalling between a network node of a mobile communication system and one or more user devices, said signalling providing information of an organisation of a plurality of resource elements of the mobile communication system used for joint positioning and sensing, wherein the reference signal is constructed from multiple positioning signals organised into a plurality of groups, wherein each resource element is identified by a time domain OFDM symbol and a frequency domain subcarrier, wherein the plurality of resource elements is organised into a plurality of groups, wherein: each group of resource elements comprises n OFDM symbols and n subcarriers; n resource elements in each group contain positioning signals; and within each OFDM symbol, a frequency distance between consecutive resource elements containing positioning signals is not constant, such that an irregular distribution of positioning signal containing resource elements is provided.

### Brief description of the drawings

Example embodiments will now be described, by way of example only, with reference to the following schematic drawings, in which:
FIG. 1 is a block diagram of a system in accordance with an example embodiment;
FIG. 2 is a block diagram showing an example distribution of positioning resource elements;
FIG. 3 is a block diagram of an example positioning system;
FIG. 4 is a block diagram of a system in accordance with an example embodiment;
FIGS. 5 and 6 are plots showing features of example implementations;
FIG. 7 is a flow chart showing an algorithm in accordance with an example embodiment;
FIG. 8 is a block diagram showing an example distribution of resource elements in accordance with an example embodiment;
FIGS. 9 to 12 are flow charts showing algorithms in accordance with example embodiments;
FIG. 13 shows a message sequence in accordance with an example embodiment;
FIG. 14 is a block diagram of components of a system in accordance with an example embodiment; and
FIG. 15 shows an example of tangible media for storing computer-readable code which when run by a computer may perform methods according to example embodiments described above.

### Detailed description

The scope of protection sought for various embodiments of the disclosure is set out by the independent claims. The embodiments and features, if any, described in the specification that do not fall under the scope of the independent claims are to be interpreted as examples useful for understanding various embodiments of the disclosure.

In the description and drawings, like reference numerals refer to like elements throughout.

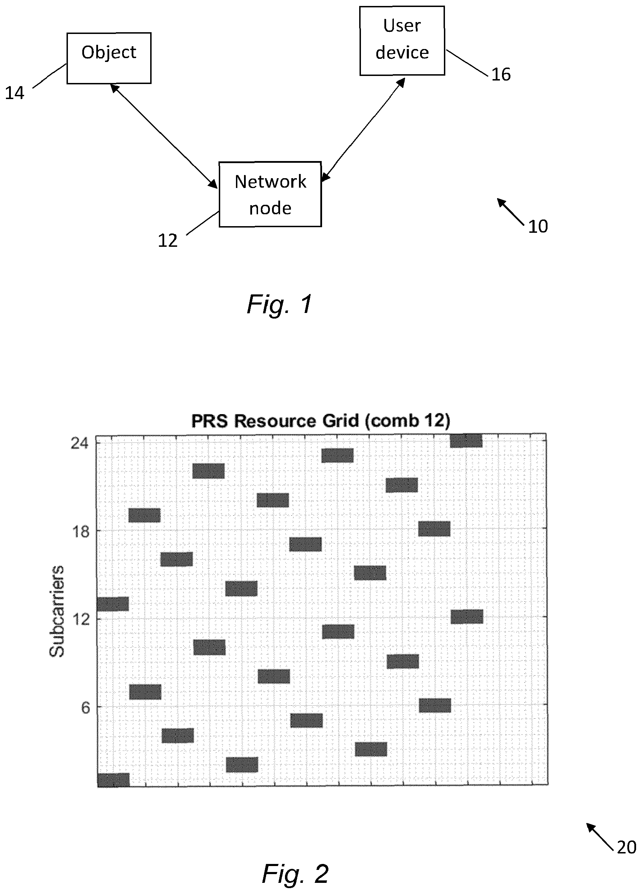

FIG. 1 is a block diagram of a system, indicated generally by the reference numeral 10, in accordance with an example embodiment. The system 10 comprises a network node 12 (such as a base station, a gNB, a distributed unit (DU) or a DU part of an integrated access and backhaul node), an object 14, and a user device 16 (e.g. a user equipment, UE). As discussed further below, the network node 12 may transmit sensing signals to the object 14 and receive responses to those signals that can be processed for sensing purposes. Similarly, the network node 12 may transmit positioning signals to the user device 16 and receive responses to those signals that can be used for positioning purposes.

Wireless sensing technologies aim to acquire information about a remote object (such as the object 14) and its characteristics without physically contacting that object. The perception data of the object and its surroundings can be utilized for analysis, so that meaningful information about the object and its characteristics can be obtained. By way of example, radar (radio detection and ranging) is a widely used wireless sensing technology that uses radio waves to determine information such as one or more of: the distance (range), angle, or instantaneous linear velocity of objects.

In the context of a mobile communication system, such as 3GPP 5G system, 5G-Advanced and next generation 6G systems, sensing capabilities may be provided by the same 5G NR wireless communication system and infrastructure as used for communication, and the sensing information could be derived from RF-based and/or non-RF based sensors. In general, joint sensing and communication algorithms may involve scenarios of communication-assisted sensing (e.g. where 5G communication system provides sensing services) or sensing-assisted communication (e.g. when sensing information related to the communication channel or environment is used to improve the communication service of the 5G system itself). By way of example, sensing information may be used to assist or enhance radio resource management, interference mitigation, beam management, mobility, positioning, etc.

Positioning Reference Signals (PRS) in 5G New Radio (NR) are downlink (DL) reference signals, currently defined with a regular periodic pattern in frequency bins, where the periodicity is specified as the parameter comb_size={2,4,6,12}. The "comb_size" relates to frequency domain multiplexing. For example, each pattern may occupy every kth resource element (where k is the comb size) of certain OFDM symbols. This means that certain OFDM symbols can support up to k-orthogonal patterns. Thus, the comb size may determine how many other gNBs can transmit their PRS symbols orthogonal to each other for a given positioning measurement.

FIG. 2 is a block diagram, indicated generally by the reference numeral 20, showing an example distribution of positioning resource elements with a comb_size of 12 (i.e. where every 12th subcarrier is used in each OFDM symbols), and the frequency offset from the edge of a resource block is {0, 6, 3, 9, 1, 7, 4, 10, 2, 8, 5, 11}.

PRS resource mapping follows a "permuted staggered comb" map. This means that the comb in the different OFDM symbols has a different and not necessarily monotonically increasing offset in the frequency domain. This provides benefits compared to a non-permuted pattern in case coherent combining cannot be done across all OFDM symbols in the PRS resource, but only on a subset of them.

A comb_size of 12 enables simultaneous transmission of PRS resources from up to 12 different gNBs, in which the active subcarriers are equally spaced 12 bins apart. Using comb_size 12, different symbols are shifted in frequency based on frequency offsets defined in 3GPP TS 38.211 Table 7.4.1.7.3-1 as following: {0, 6, 3, 9, 1, 7, 4, 10, 2, 8, 5, 11}. The sequence of frequency offset is not random but has a structure; for example, the offset between odd and even sequence indexes is half of the comb_size. This sequence allows orthogonality of PRS multiplexed on OFDM symbols from different gNBs (or transmission points). In the frequency domain, PRS resources can be configured to have a bandwidth up to 272 resource blocks, which is very appealing for sensing applications due to the potential large bandwidth. This means that PRS can cover practically the entire carrier (the maximum number of resource blocks per cell (or component carrier) according to NR specs is 275).

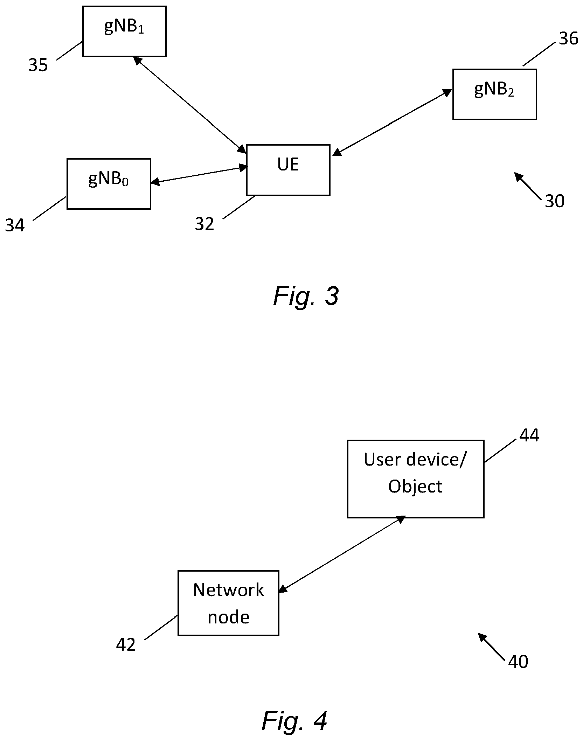

FIG. 3 is a block diagram, indicated generally by the reference numeral 30, of an example positioning system. The system 30 comprises a UE 32 and first to third gNBs (gNB₀ 34, gNB₁ 35, gNB₂ 36). PRS may be used for UE positioning-based services in a system such as the system 30 described above.

Observed time difference of arrival (OTDoA) is a DL-based positioning technique in which trilateration or multilateration can be performed from reference signal timing difference (RSTD) or time difference of arrival (TDOA), which is the time difference between one reference gNB and neighbouring gNBs. In the example system 30, the UE 32 may receive synchronized transmitted signals from all the participating gNBs (gNBs 34 to 36) and the geographic location of the UE 32 can be estimated based on the timing differences. For example, PRS signals can be received by the UE 32 at different time instances of {TOA₀, TOA₁, TOA₂} and hyperbola equations derived from the {RSTD_{1,0}, RSTD_{2,0}} set.

FIG. 4 is a block diagram of a system, indicated generally by the reference numeral 40, in accordance with an example embodiment. The system 40 comprises a network node 42 (such as a gNB) and a user device or object 44. The user device may be a user equipment (UE) of a 3GPP system.

The network node 42 implements Joint Communications and Sensing (JCAS), for example by reusing New Radio (NR) signals to perform downlink (DL) network sensing. Positioning reference signals (PRS) are good candidates for NR JCAS applications. The relevance of PRS in "monostatic radar" case includes a relatively large allocated bandwidth and/or better range estimation, compared with other downlink reference signals which are known to the gNB. Furthermore, PRS can be transmitted towards up to 64 different directions to cover both azimuth and elevation spans, which may compensate for the limited number of beam directions with PDSCH as the reference signal.

In OFDM-based joint communications and sensing, the relative locations of objects in a radar scene may be estimated, realized by symbol-wise division and IFFT operation. However, since the PRS signal includes numerous empty subcarriers and has periodic locations for the active subcarriers in frequency, ambiguity in the form of so-called sensing ghosts appears in the range estimation originated from actual targets reflections. The locations of sensing ghosts are repeated every Nifft/comb_size samples in both directions away from its originating target location, where Nifft is the IFFT size. Accordingly, a regular pattern of PRS active subcarriers may not be fully compatible with network sensing applications.

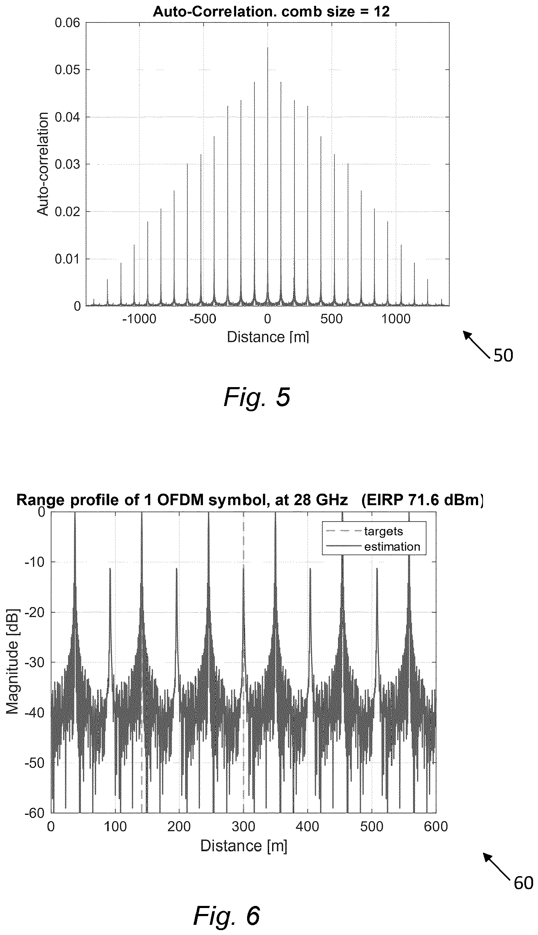

FIG. 5 is a plot, indicated generally by the reference numerals 50, showing features of an example implementation. Specifically, the plot 50 shows a periodic pattern (i.e. "ghosting") caused by auto-correlation of a received time-domain OFDM symbol, using comb_size 12.

FIG. 6 is a plot, indicated generally by the reference numeral 60, showing features of an example implementation. The example plot 60 shows range estimation for two targets distanced 141 metres and 300 metres away from the gNB (e.g. the network node 42). In the plot 60, ambiguities caused by the comb structure of the PRS mapping are repeated every 104 metres from the actual targets, and thus it would be difficult (if not impossible) for the sensing agent to determine which of these peaks in the range estimation correspond to actual targets, or sensing ghosts.

The range interval between the ambiguities depend on the comb value as well as on the subcarrier spacing - the lower the subcarrier spacing or comb value, the wider the range interval. Table 1 shows range intervals between ambiguities for difference comb sizes and sub-carrier spacing (SCS) and based on the two-way propagation delay. In the case of positioning, one-way propagation delay is considered and the ambiguity intervals are twice the values shown in Table 1.

**Table 1: Range interval between ambiguities for regular PRS pattern [m]**

| | Comb size = 2 | Comb size = 4 | Comb size = 6 | Comb size = 12 |
|---|---|---|---|---|
| SCS= 15kHz | 4996 | 2498 | 1665 | 832 |
| SCS= 30kHz | 2498 | 1249 | 832 | 416 |
| SCS= 60kHz | 1250 | 624 | 416 | 208 |
| SCS= 120kHz | 624 | 312 | 208 | 104 |
| SCS= 240kHz | 312 | 156 | 104 | 52 |

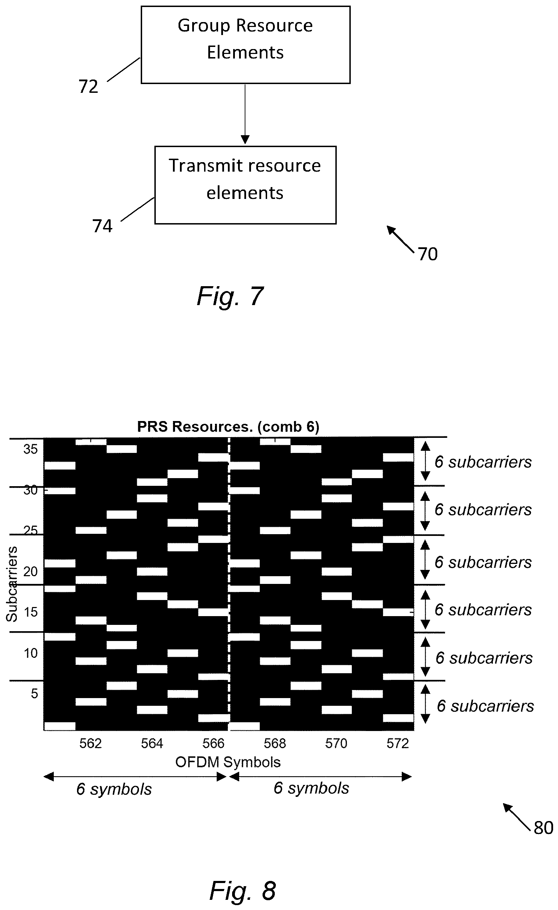

FIG. 7 is a flow chart showing an algorithm, indicated generally by the reference numeral 70, in accordance with an example embodiment. As discussed in detail below, the algorithm 70 seeks to generate a reference signal suitable for both sensing and positioning.

The algorithm 70 starts at operation 72, where a plurality of resource elements of a mobile communication system are organised into a plurality of groups. Each resource element is identified by a time domain OFDM symbol and a frequency domain subcarrier.

As discussed in detail below, n resource elements in each group contain (or carry) positioning signals; and within each OFDM symbol, a frequency distance between consecutive resource elements (across groups) containing positioning signals is not constant, such that an irregular distribution of positioning signal containing resource elements is provided.

At operation 74, the resource elements are transmitted as part of a joint positioning and sensing scheme.

Thus, the operation 72 seeks to define a reference signal suitable for joint sensing (e.g. with a gNB acting as radar) and positioning (e.g. with a UE measuring ToA or some other positioning metric) by organizing resource elements of the reference signal in a suitable manner. Note that UE could use the reference signal for sensing purposes.

On the UE side, positioning may include:
- Receiving multiple irregular PRS patterns (in frequency), where the multiple patterns are mutually orthogonal in frequency and where the multiple patterns are designed in such that they support sensing without ghosts; and
- Measuring ToA (or some other positioning metric) based on multiple irregular patterns.

In some example embodiments, the irregular patterns generated in the operation 72 are designed to avoid ambiguities in range estimation, whilst seeking to respect the following two constraints from legacy PRS:
- The proposed pattern allows for multiplexing of multiple gNB transmissions in orthogonal frequency resources by easily shifting the irregular pattern; and
- The proposed pattern does not harm the positioning accuracy for UEs.

Compared to the legacy PRS patterns, an irregular pattern (in frequency) has been designed that seeks to avoid ambiguity in range estimation. Together with this, the configuration of the PRS for joint sensing and positioning can be triggered by the gNB, based on:
- Need for sensing the environment or any objects (in any direction).
- Identification of some new objects.
- Capability from UE to support the irregular PRS pattern.

The configuration of the irregular PRS pattern may be carried out by the network node (e.g. gNB), and can be configured to:
- Last a specific number of slots.
- Be multiplexed in time with legacy pattern (e.g., gNB would perform sensing only in specific occasions).
- Be used in specific beams (PRS resources in 3GPP terminology)
- Allow the gNB to determine if feedback is needed from UEs for positioning in PRS resources using irregular pattern (i.e., irregular pattern would be used only for sensing, and not for positioning)
- Occur periodically or non-periodically

FIG. 8 is a block diagram, indicated generally by the reference numeral 80, showing an example distribution of resource elements in accordance with an example embodiment. The proposed pattern seeks to enable good sensing performance without significantly impacting the original purpose of PRS, thus allowing for joint sensing and positioning.

In this example, the PRS comb_size is 6. (It is noted that the irregular pattern shown in FIG. 8 does not follow a comb-type pattern, but we keep the same comb_size value to indicate the number of resources active for PRS transmission being the same as the equivalent legacy pattern.)

General constraints that may be taken into account in the operation 72 in order to provide an irregular PRS allocation in frequency are listed below. Among other advantages, these constrains seek to allow for multiplexing of multiple gNB transmissions in orthogonal resources while avoiding sensing ghosts.

For each resource grid (e.g. the group discussed above) of size {comb_size subcarriers, comb_size OFDM symbols}, the irregular PRS pattern may be generated based on some or all of the following constraints (where each grid follows the constraints):
1. In each {comb_size subcarriers, comb_size OFDM symbols} resource grid for a given gNB, there may be a comb_size number of active frequency-time resources carrying PRS. Thus, in the example distribution 80, each 6x6 block of resource elements carries 6 PRS.
2. Within the {comb_size subcarriers, comb_size OFDM symbols} resource grid, a given subcarrier may be active (transmitting PRS) only in one OFDM symbol. Thus, in the example distribution 80, each subcarrier is active for one (and only one) OFDM symbol within the relevant 6x6 block of resource elements.
3. Within the {comb_size subcarriers, comb_size OFDM symbols} resource grid, PRS may only be transmitted in one subcarrier in one OFDM symbol. Thus, in the example distribution 80, PRS is transmitted for one (and only one) subcarrier within the relevant 6x6 block of resource elements.
4. Within one OFDM symbol, the frequency distance (in resource elements) between consecutive frequency resources carrying PRS may not be constant (i.e., in legacy pattern the distance in resource elements between consecutive resources for PRS is always the same, and equal to the comb_size). Note that this constraint applies across different blocks of resource elements.

The proposed pattern (of which the distribution 80 is an example) seeks to enable good sensing performance without significantly impacting the original purpose of PRS, thus allowing for joint sensing and positioning. The proposed pattern also builds from the existing 3GPP mapping offset defined for the legacy pattern. To do so, in some example embodiments, co-prime sequence generation is used to control the randomization in active subcarriers, as well as allowing the multiplexing of different gNB transmissions in orthogonal frequency-time resources, as discussed further below.

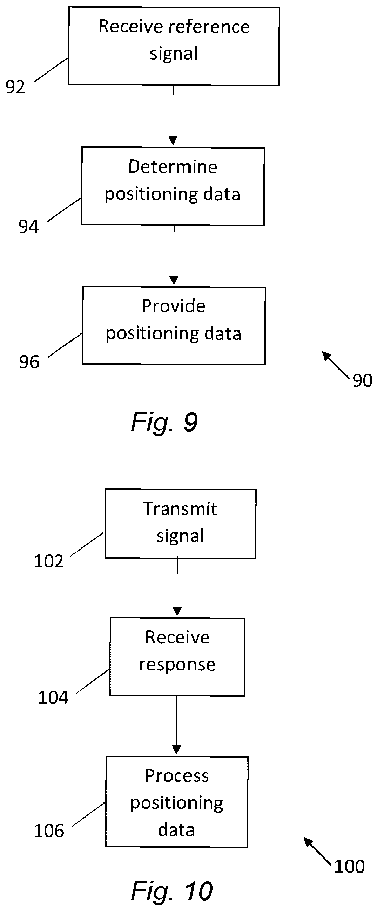

FIG. 9 is a flow chart showing an algorithm, indicated generally by the reference numeral 90, in accordance with an example embodiment. The algorithm 90 may be implemented by a device (such as a UE) generating positioning data (such as TOA). For example, the algorithm 90 may be implemented at the user device 16 of the system 10 described above.

The algorithm 90 starts at operation 92, where a reference signal (e.g. a joint positioning and sensing signal) comprising a plurality of resource elements of a mobile communication system is received. The reference signal may be transmitted by a network node (e.g. the network node 12) of a mobile communication system. Moreover, each resource element may be identified by a time domain OFDM symbol and a frequency domain subcarrier.

As discussed above, the plurality of resource elements received in the operation 92 may be organised into a plurality of groups. Specifically: each group of resource elements comprises *n* OFDM symbols and *n* subcarriers; *n* resource elements in each group contain positioning signals; and within each OFDM symbol, a frequency distance between consecutive resource elements containing positioning signals is not constant.

In this way, an irregular distribution of positioning signal containing resource elements is provided.

At operation 94, positioning data (such as Time of Arrival data) may be determined based on the received resource elements. The positioning data may be for use in generating a position estimate based on the received reference signal.

At operation 96, the positioning data determined in the operation 94 is provided, for example as an output. In one example embodiment, the positioning data is provided to a network node (e.g. the network node that transmitted the reference signal including the resource elements received in the operation 92). The positioning data may then be used in the generation of a position estimate.

FIG. 10 is a flow chart showing an algorithm, indicated generally by the reference numeral 100, in accordance with an example embodiment. The algorithm 100 may be implemented by a network node of a mobile communication system. For example, the algorithm 100 may be implemented at the network node 12 of the system 10 described above.

The algorithm 100 starts at operation 102, where a reference signal (e.g. a joint positioning and sensing signal) comprising a plurality of resource elements of a mobile communication system is transmitted. The resource elements are organised into a plurality of groups, wherein each resource element is identified by a time domain OFDM symbol and a frequency domain subcarrier, wherein: each group of resource elements comprises n OFDM symbols and n subcarriers; n resource elements in each group contain positioning signals; and within each OFDM symbol, a frequency distance between consecutive resource elements containing positioning signals is not constant, such that an irregular distribution of positioning signal containing resource elements is provided. The operation 102 is therefore an example implementation of the operation 74 described above.

At operation 104, a response to the reference signal transmitted in the operation 102 is received. The response comprises a positioning estimate, or data (such as Time of Arrival data) for use in generating a position estimate, based on the received reference signal. The received response may be that provided in the operation 96 described above.

At operation 106, the positioning data received in the operation 104 is processed, for example to generate a position estimate of the relevant user device.

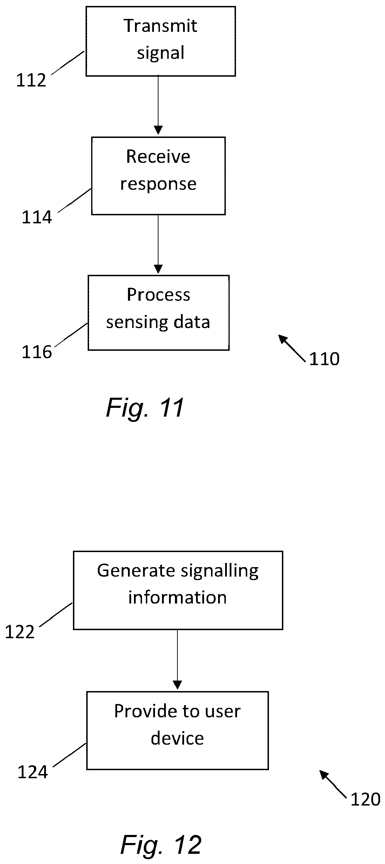

FIG. 11 is a flow chart showing an algorithm, indicated generally by the reference numeral 110, in accordance with an example embodiment. The algorithm 110 may be implemented by a network node of a mobile communication system (e.g. the same network node used to implement the algorithm 100 described above). For example, the algorithm 100 may be implemented at the network node 12 of the system 10 described above.

The algorithm 110 starts at operation 112, where a reference signal (e.g. a joint positioning and sensing signal) comprising a plurality of resource elements of a mobile communication system is transmitted. The operation 112 may be identical to the operation 102.

At operation 114, a response to the reference signal transmitted in the operation 112 is received.

At operation 116, the response received in the operation 114 is processed as part of a sensing arrangement (e.g. radar or some similar sensing system).

A more detailed explanation of an example arrangement for generating the pattern for PRS mapping for an example joint positioning and reference signal is provided below.

An irregular pattern can be obtained from shifting the indices of active PRS subcarriers in existing standards, using the integer increments of {0,1,..., comb_size-1} for each active subcarrier. The same incrementing can be applied to other symbols in that given comb_size OFDM symbols set, such that orthogonality is preserved. Thus, new indices (i.e. gridMatrix) can be made by: adding shift with positive values (0,1,...comb_size-1) to the beginning resource block (RB) number of each comb_size part in frequency (i.e. bias). Similarly in the following example, we make shifting values first (i.e. offsetMatrix), then we add them to their corresponding RB number.

In an example embodiment, in order to generate the proposed irregular pattern, the following steps may be taken. We can create a table of indices that map to each resource grid of size {comb_size subcarriers, comb_size OFDM symbols} that is used to transmit the PRS signal.

In the first row of offsetMatrix, a co-prime-based sequence of length comb_size is generated out of PRS frequency offsets defined in TS 38.211 table 7.4.1.7.3-1. More specifically, if comb_12 is used, we can use 5 or 7 as co-primes (11 does not generate irregular pattern).
▪ 3gppOffsets are taken from Table 7.4.1.7.3-1 for a given comb value.
▪ The first row is generated by modulo operation: (3gppOffsets^{∗}coprime) mod (comb_size)

In the second row of offsetMatrix, add PRS frequency offsets from TS 38.211 table 7.4.1.7.3-1 corresponding to comb_size are added and then flip the row.
▪ 3gppOffsets vector, with reversed order of the elements.

The steps below are repeated until the number of rows in offsetMatrix equals the number of PRS active subcarriers:
- *new* row = use *previous* row as indexing for *current* row
- new_row = current_row (using the previous_row for the order of the elements)

The completed matrix (offsetsMatrix) holds the new PRS frequency offsets that is directly mapped to the locations of PRS symbols in resource grid parts of size {comb_size subcarriers, comb_size OFDM symbols}. Table 2 shows example irregular frequency offsets for 12 OFDM symbols, spanning over 12 PRB with comb_size = 12. Tables for other comb_sizes can readily be generated.

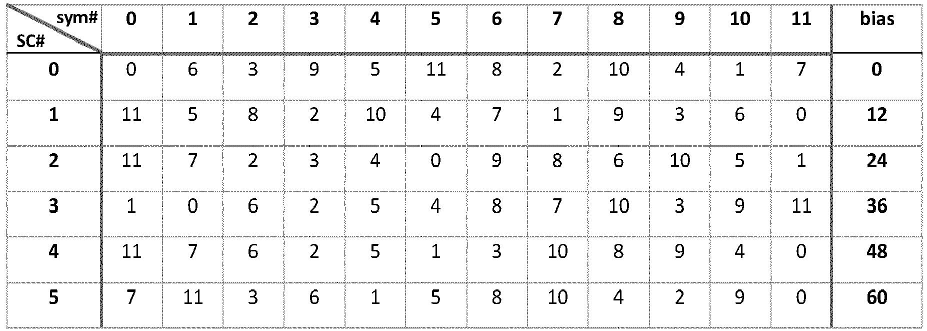

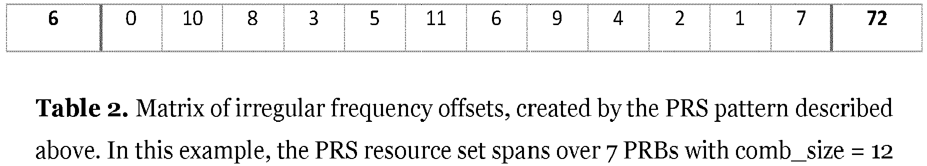

Next, add element-wise, the bias vector to each column of the offsets matrix. Bias places the offsets to their corresponding frequency regions in the resource grid, where each region has comb_size subcarriers. Location of random PRS symbols in the slot grid after addition with bias values is listed in Table 3.
∘ bias = comb_size^{∗}[1; 2; ...; number of PRS active subcarriers]';
∘ gridMatrix = offsetsMatrix + bias;

Then, circular shift is applied to the gridMatrix across the columns (column-wise shift) to make the new orthogonal grid mapping for other gNBs. (Shifting values can be based on *3gppOffsets* for 12 gNBs.)

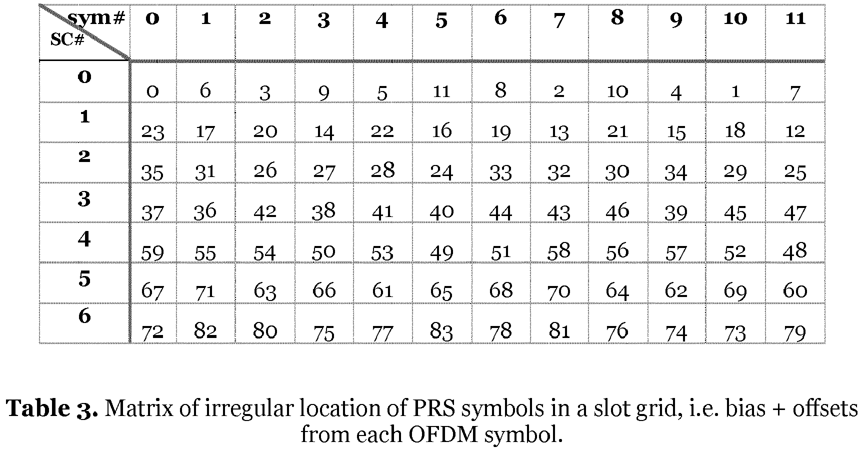

FIG. 12 is a flow chart showing an algorithm, indicated generally by the reference numeral 120, in accordance with an example embodiment.

The algorithm starts at operation 122, where signalling information is generated. The signalling information provides information relating to the organisation of a joint positioning and sensing signal. More specifically, the signalling information provides information relating to how a plurality of resource elements of a mobile communication system are organised, as discussed in detail above.

At operation 124, the signalling information is provided to one or more user devices. The operation 124 may be implemented by a signal being transmitted by a network node (e.g. a gNB) to one or more user devices (e.g. UEs).

The provision of signalling information to the user devices ensures that the user devices can interact with a network node as expected. It should be noted that the signal information exchanged in the operation 122 may include a user device indicating that said user device supports signals containing the irregular distribution of positioning signal containing resource elements described herein.

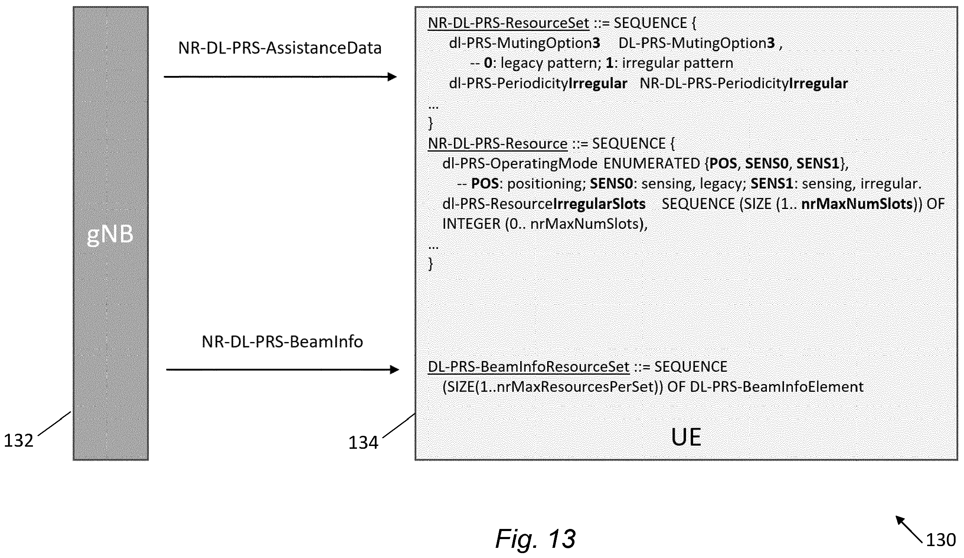

In order to support the joint positioning and sensing messages described above, new fields may need to be added to the signalling between network nodes and user devices. By way of example, FIG. 13 shows a message sequence, indicated generally by the reference numeral 130, in accordance with an example embodiment. The message sequence 130 shows messages provided between a gNB 132 and a UE 134.

The message sequence 130 includes messages NR-DL-PRS-AssistanceData and NR-DL-PRS-BeamInfo sent from the gNB 132 to the UE 134. In the message sequence 130:
- MutingOption3 controls the muting of PRS resource repetitions;
- PeriodicityIrregular is periodicity in slots if irregular pattern has a periodic occurrence;
- OperatingMode selects the functionality for each PRS resources using {POS: only UE positioning mode, SENS0: DL sensing with legacy PRS pattern, SENS1: DL sensing with irregular PRA pattern};
- resourceIrregularSlots shows the slots number for every PRS resources using nonperiodic PRS irregular pattern, and
- BeamInfoResourceSet contains the azimuth-elevation directions for the PRS resource set.

Of course, the message sequence 130 is provided by way of example only; alternative arrangements will be apparent to those skilled in the art.

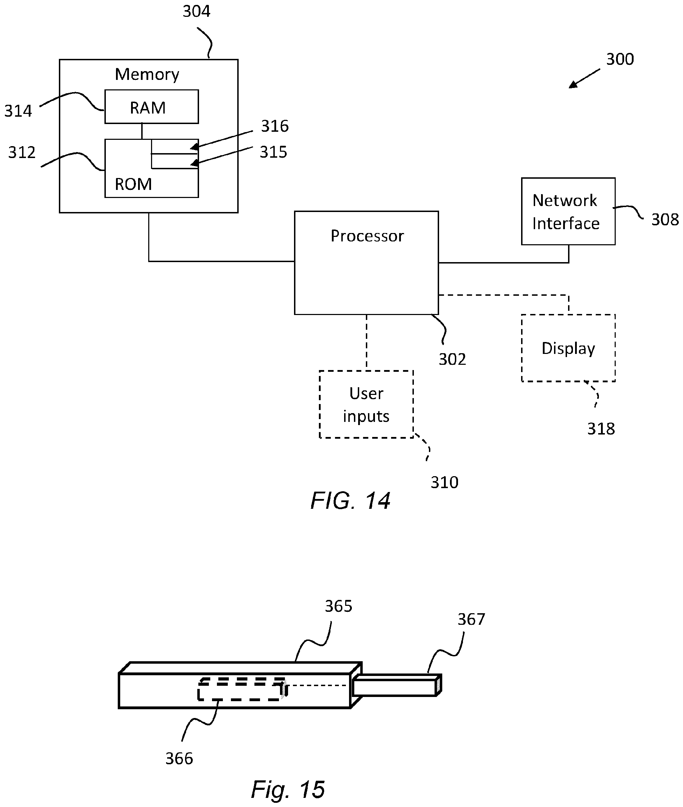

For completeness, FIG. 14 is a schematic diagram of components of one or more of the example embodiments described previously, which hereafter are referred to generically as a processing system 300. The processing system 300 may, for example, be (or may include) the apparatus referred to in the claims below.

The processing system 300 may have a processor 302, a memory 304 coupled to the processor and comprised of a random access memory (RAM) 314 and a read only memory (ROM) 312, and, optionally, a user input 310 and a display 318. The processing system 300 may comprise one or more network/apparatus interfaces 308 for connection to a network/apparatus, e.g. a modem which may be wired or wireless. The network/apparatus interface 308 may also operate as a connection to other apparatus such as device/apparatus which is not network side apparatus. Thus, direct connection between devices/apparatus without network participation is possible.

The processor 302 is connected to each of the other components in order to control operation thereof.

The memory 304 may comprise a non-volatile memory, such as a hard disk drive (HDD) or a solid state drive (SSD). The ROM 312 of the memory 304 stores, amongst other things, an operating system 315 and may store software applications 316. The RAM 314 of the memory 304 is used by the processor 302 for the temporary storage of data. The operating system 315 may contain code which, when executed by the processor implements aspects of the methods, algorithms and message sequences 70, 90, 100, 110, 120 and 130 described above. Note that in the case of small device/apparatus the memory can be most suitable for small size usage i.e. not always a hard disk drive (HDD) or a solid state drive (SSD) is used.

The processor 302 may take any suitable form. For instance, it may be a microcontroller, a plurality of microcontrollers, a processor, or a plurality of processors.

The processing system 300 may be a standalone computer, a server, a console, or a network thereof. The processing system 300 and needed structural parts may be all inside device/apparatus such as IoT device/apparatus i.e. embedded to very small size.

In some example embodiments, the processing system 300 may also be associated with external software applications. These may be applications stored on a remote server device/apparatus and may run partly or exclusively on the remote server device/apparatus. These applications may be termed cloud-hosted applications. The processing system 300 may be in communication with the remote server device/apparatus in order to utilize the software application stored there.

FIG. 15 shows tangible media, specifically a removable memory unit 365, storing computer-readable code which when run by a computer may perform methods according to example embodiments described above. The removable memory unit 365 may be a memory stick, e.g. a USB memory stick, having internal memory 366 for storing the computer-readable code. The internal memory 366 may be accessed by a computer system via a connector 367. Other forms of tangible storage media may be used. Tangible media can be any device/apparatus capable of storing data/information which data/information can be exchanged between devices/apparatus/network.

Embodiments of the present invention may be implemented in software, hardware, application logic or a combination of software, hardware and application logic. The software, application logic and/or hardware may reside on memory, or any computer media. In an example embodiment, the application logic, software or an instruction set is maintained on any one of various conventional computer-readable media. In the context of this document, a "memory" or "computer-readable medium" may be any non-transitory media or means that can contain, store, communicate, propagate or transport the instructions for use by or in connection with an instruction execution system, apparatus, or device, such as a computer.

Reference to, where relevant, "computer-readable medium", "computer program product", "tangibly embodied computer program" etc., or a "processor" or "processing circuitry" etc. should be understood to encompass not only computers having differing architectures such as single/multi-processor architectures and sequencers/parallel architectures, but also specialised circuits such as field programmable gate arrays FPGA, application specify circuits ASIC, signal processing devices/apparatus and other devices/apparatus. References to computer program, instructions, code etc. should be understood to express software for a programmable processor firmware such as the programmable content of a hardware device/apparatus as instructions for a processor or configured or configuration settings for a fixed function device/apparatus, gate array, programmable logic device/apparatus, etc.

If desired, the different functions discussed herein may be performed in a different order and/or concurrently with each other. Furthermore, if desired, one or more of the above-described functions may be optional or may be combined. Similarly, it will also be appreciated that the flow diagrams and message sequences of FIGS. 7 and 9 to 13 are examples only and that various operations depicted therein may be omitted, reordered and/or combined.

It will be appreciated that the above described example embodiments are purely illustrative and are not limiting on the scope of the invention. Other variations and modifications will be apparent to persons skilled in the art upon reading the present specification.

Moreover, the disclosure of the present application should be understood to include any novel features or any novel combination of features either explicitly or implicitly disclosed herein or any generalization thereof and during the prosecution of the present application or of any application derived therefrom, new claims may be formulated to cover any such features and/or combination of such features.

Although various aspects of the invention are set out in the independent claims, other aspects of the invention comprise other combinations of features from the described example embodiments and/or the dependent claims with the features of the independent claims, and not solely the combinations explicitly set out in the claims.

It is also noted herein that while the above describes various examples, these descriptions should not be viewed in a limiting sense. Rather, there are several variations and modifications which may be made without departing from the scope of the present invention as defined in the appended claims.

## Claims

1. An apparatus comprising:
means for organising a plurality of resource elements of a mobile communication system into a plurality of groups, wherein each resource element is identified by a time domain OFDM symbol and a frequency domain subcarrier, wherein:
each group of resource elements comprises n OFDM symbols and n subcarriers;
n resource elements in each group contain positioning signals; and
within each OFDM symbol, a frequency distance between consecutive resource elements containing positioning signals is not constant, such that an irregular distribution of positioning signal containing resource elements is provided.

2. An apparatus as claimed in claim 1, further comprising means for transmitting said resource elements as part of a joint positioning and sensing scheme.

3. An apparatus as claimed in any one of the preceding claims, wherein resource elements containing positioning signals are available for sensing purposes.

4. An apparatus as claimed in any one of the preceding claims, further comprising means for signalling to one or more user devices of the mobile communication system providing information of the organisation of said resource elements.

5. An apparatus comprising:
means for determining organisation of a plurality of resource elements of a mobile communication system used for joint positioning and sensing based on signalling received from a network node of a mobile communication system, said signalling providing information of said organisation, wherein each resource element is identified by a time domain OFDM symbol and a frequency domain subcarrier, wherein the plurality of resource elements is organised into a plurality of groups, wherein: each group of resource elements comprises *n* OFDM symbols and *n* subcarriers; *n* resource elements in each group contain positioning signals; and within each OFDM symbol, a frequency distance between consecutive resource elements containing positioning signals is not constant, such that an irregular distribution of positioning signal containing resource elements is provided; and
means for determining data for use in generating a position estimate based on the received positioning and sensing signal.

6. An apparatus as claimed in claim 5, further comprising:
means for providing an output reporting the determined data for use in generating said position estimate.

7. An apparatus comprising:
means for transmitting a joint positioning and sensing signal comprising a plurality of resource elements of a mobile communication system organised into a plurality of groups, wherein each resource element is identified by a time domain OFDM symbol and a frequency domain subcarrier, wherein: each group of resource elements comprises *n* OFDM symbols and *n* subcarriers; *n* resource elements in each group contain positioning signals; and within each OFDM symbol, a frequency distance between consecutive resource elements containing positioning signals is not constant, such that an irregular distribution of positioning signal containing resource elements is provided.

8. An apparatus as claimed in claim 7, further comprising means for generating the joint positioning and sensing signal.

9. An apparatus as claimed in claim 7 or claim 8, further comprising means for receiving, in response to the joint positioning and sensing signal, a positioning estimate, or data for use in generating a position estimate, based on the received positioning and sensing signal.

10. An apparatus as claimed in any one of claims 7 to 9, further comprising means for processing a response to the joint positioning and sensing as part of a sensing arrangement.

11. An apparatus as claimed in any one of the claims 7 to 10, further comprising means for providing signalling information providing information of said organisation of said joint positioning and sensing signal.

12. An apparatus as claimed in any one of the preceding claims, wherein one of the subcarriers of a group carries a positioning signal.

13. An apparatus as claimed in any one of the preceding claims, wherein during each OFDM symbol, a group carries one positioning signal.

14. An apparatus as claimed in any one of the preceding claims, wherein said n OFDM symbols and n subcarriers comprise n non-overlapping resource element patterns that can be assigned to n different cells or n different transmission points.

15. A reference signal suitable for joint positioning and sensing comprising a plurality of resource elements of a mobile communication system, wherein the reference signal is constructed from multiple positioning signals organised into a plurality of groups, wherein each resource element is identified by a time domain OFDM symbol and a frequency domain subcarrier, wherein:
each group of resource elements comprises *n* OFDM symbols and *n* subcarriers;
*n* resource elements in each group contain positioning signals; and
within each OFDM symbol, a frequency distance between consecutive resource elements containing positioning signals is not constant, such that an irregular distribution of positioning signal containing resource elements is provided.
